# EUROPEAN PATENT APPLICATION

(11) **EP 1 460 866 A2**
(43) Date of publication of application: **22.09.2004**
(21) Application number: 04006384.4
(22) Date of filing: 17.03.2004
(51) Int. Cl.: H04Q 7/22, H04Q 7/38

(54) **Mobile communication system, radio network controller and method of transferring data employed therefor**

(30) Priority: 19.03.2003 JP 2003074691
(71) Applicant: NEC CORPORATION, Tokyo (JP)
(72) Inventor: Shibata, Kazuko, c/o NEC Corp., Tokyo (JP); Ueda, Yoshio, c/o NEC Corp., Tokyo (JP)
(74) Representative: VOSSIUS & PARTNER

(57) **Abstract**

A mobile communication system is provided which is capable of realizing high-speed packet data transfer without causing any data loss during handover between base stations while high-speed packet communication by an HSDPA system is in progress. When an RNC receives from a UE a message requesting activation of handover between Nodes B in the course of high-speed packet communication, it stores a Sequence Numbers of HS-DSCHFP that have been sent up to that moment to the NodeB, and informs a Serving NodeB of a destination of data. The RNC sends NBAP: Radio Link Reconfiguration Commit by routing and thereafter starts data transfer from the Serving NodeB to a Target NodeB.

## Description

The present invention relates to a mobile communication system, a radio network controller, and a method of transferring data employed therefor, and more particularly, to a technique for realizing data transfer between Nodes B (radio base stations) in the course of high-speed packet communication by an HSDPA (High Speed Downlink Packet Access) system based on the IMT (International Mobile Telecommunications)-2000 system.

In order to realize faster packet transmission based on the IMT-2000 system, the HSDPA has recently become of major consideration in the industry, the main target of which is to increase downlink peak data rate, reduce transmission time delay, achieve high throughput, and the like.

The HSDPA is a system offering high-speed packet transmission of 8 Mbps in the downlink, where an HS-DSCH (High Speed-Downlink Shared Channel) is used as a downlink transport channel.

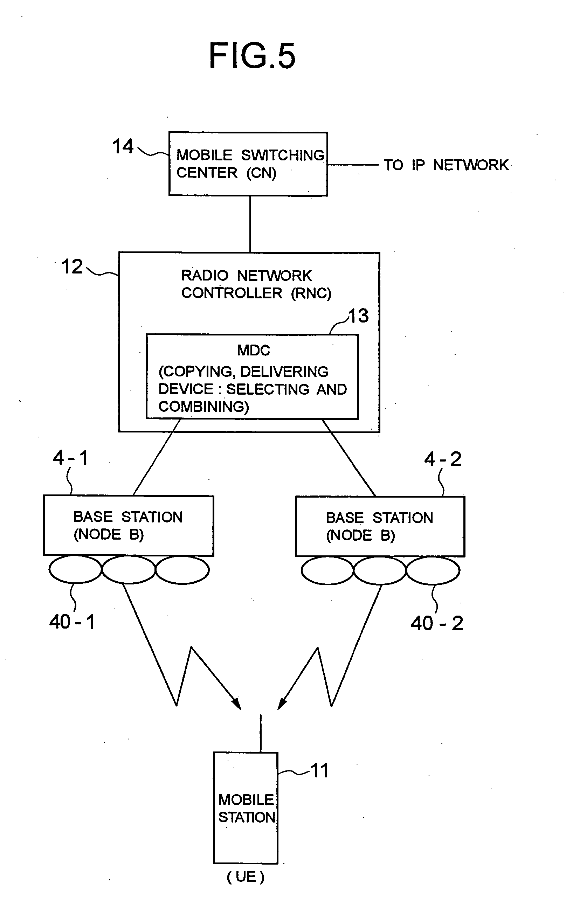

FIG. 5 shows a configuration of a mobile communication system employing a method of transmitting packets as described above. The mobile communication system shown herein comprises a mobile station (UE: User Equipment) 11, base stations (Nodes B) 4-1 and 4-2 operable to manage cells 40-1 and 40-2, respectively, an RNC (Radio Network Controller) 12 operable to control the base stations 4-1 and 4-2, and a CN (Core Network: mobile switching center) 14 operable to switch a mobile switching network. The RNC 12 has an MDC (Macro Diversity Combining) 13 responsible for copying and distributing data as well as for combining and selecting data.

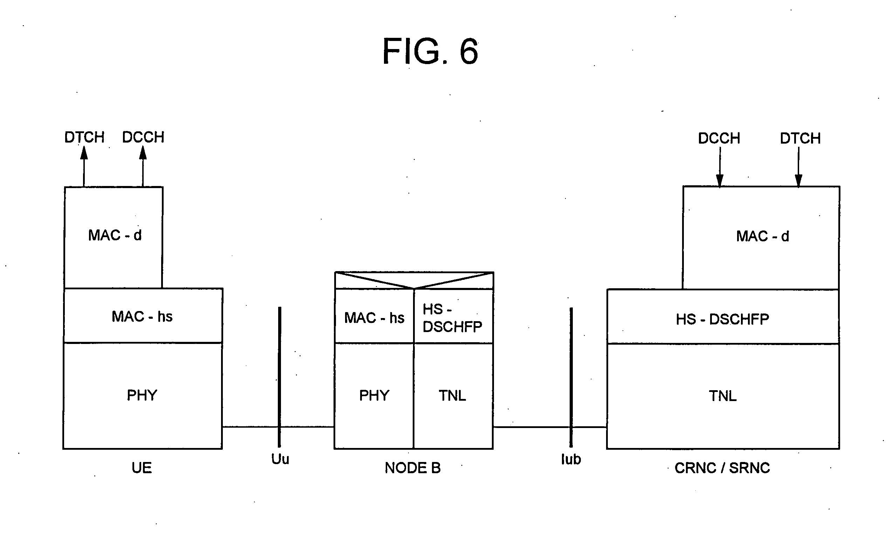

In the described mobile communication system, a protocol stack for the HS-DSCH includes an MAC-hs (High Speed Medium Access Control) function in the NodeB, as shown in FIG. 6.

Referring to FIG. 6, an Interface between the RNC [CRNC (Controlling RNC)/SRNC (Serving RNC)] and the base station is referred to as Iub, and an Interface between the base station and the mobile station is referred to as Uu.

The protocol stack of the mobile station comprises an MAC-d (Dedicated MAC) layer, MAC-hs layer and PHY (physical) layer, and the protocol stack of the base station comprises an MAC-hs layer, a PHY layer, an HS-DSCHFP (High Speed-Downlink Shared Channel Frame Protocol) layer, and a TNL (Transport Network Layer). Also, the protocol stack of the RNC comprises the MAC-d layer, HS-DSCHFP layer, and TNL.

A transport channel such as a Dedicated Channel that is used for voice calls, allows soft handover by virtue of the function of the MDC in the RNC that copies data and distributes it to different base stations. The HSDPA system, however, cannot achieve handover between base stations because the MAC-hs function is provided to the base station.

Therefore, when the handover between base stations occurs while HSDPA-basedhigh speed packet communication is in progress, the RNC is required to switch a destination of downlink packet data from a handover source base station (Serving NodeB) to a handover destination base station (Target NodeB) (For example, TS25.401, V.5.2.0 (2002-03), Chapter 11.2.7, presented by 3GPP (3rd Generation Partnership Project)).

In this switching process, the MAC-hs function in the handover source base station is reset to clear data stored on a queue, therefore leading to data loss.

In the case where an upper RLC (Radio Link Control) layer is a delivery confirming type (AM: Acknowledge Mode), data involved in data loss is recovered, while in a delivery non-confirming type (UM: Unacknowledge Mode) , no packets cleared in upper protocols are resent.

The conventional data transfer method, therefore, encounters a problem of causing data loss of high speed packets at the mobile station, when handover between base stations occurs due to the move or the like of a subscriber in the course of HSDPA-based high speed packet communication using the RLC-UM.

In order to prevent this data loss, it is necessary to transfer the high-speed packet data between the base stations when they are switched. In addition, the handover destination base station is required to send to the mobile station in right order the high-speed packet data transmitted from the RNC and the handover source base station.

The present invention has therefore been proposed to solve the conventional problem, and has an object to provide a mobile communication system, a radio network controller, and a method of transferring data employed therefor, all of which are capable of realizing transfer of high-speed packet data without causing any data loss in handover between base stations in the course of high-speed packet communication.

The present invention is directed to a mobile communication system including a radio network controller controlling a base station. The mobile communication system comprises means for transferring packet data from a handover source base station to a handover destination base station when handover between base stations occurs due to a move of a mobile station in the course of high-speed packet communication between the base station and the mobile station.

The present invention is further directed to a radio network controller controlling a base station, which comprises means for transferring packet data from a handover source base station to a handover destination base station when handover between base stations occurs due to a move of a mobile station in the course of high-speed packet communication between the base station and the mobile station.

The present invention is also directed to a method of transferring data for the mobile communication system including a radio network controller controlling abase station. Themethod comprises a step of transferring packet data from a handover source base station to a handover destination base station when handover between base stations occurs due to a move of a mobile station in the course of high-speed packet communication between the base station and the mobile station.

Specifically, in an RNC (Radio Network Controller) of an IMT (International Mobile Telecommunications)-2000 system, when handover between base stations (Nodes B) occurs while a high speed packet communication based on the HSDPA (High Speed Downlink Packet Access) is in progress, the mobile communication system of the present invention makes possible successive reception of high-speed packet without any data loss, by routing with an IP (Internet Protocol) address or by establishing an AAL2 [ATM (Asychronous Transfer Mode) Adaptation Layer type 2] connection between base stations thereby to transfer data.

The HSDPA is a system offering high-speed packet transmission of 8 Mbps in the downlink, where an HS-DSCH (High Speed-Downlink Shared Channel) is used as a downlink transport channel.

A protocol stack for the HS-DSCH (see FIG. 6) includes an MAC-hs (High Speed Medium Access Control) function in the base station. A transport channel such as a Dedicated Channel that is used for voice calls, allows soft handover by virtue of the function of an MDC (Macro Diversity Combining) provided in the RNC that is responsible for copying data and distributing it to different base stations. The HSDPA system, however, cannot achieve soft handover between base stations because the MAC-hs function is provided to the base station.

Therefore, when the handover between base stations occurs while HSDPA-based high speed packet communication is in progress, the RNC is required to switch a destination of downlink packet data from a handover source base station (Serving NodeB) to a handover destination base station (Target NodeB). In this switching process, the MAC-hs function in the handover source base station is reset to clear data stored on a queue, therefore causing data loss.

In the case where an upper RLC (Radio Link Control) layer is a delivery confirming type (AM: Acknowledge Mode), data involved in data loss is recovered, while in a delivery non-confirming type (UM: Unacknowledge Mode), no packets cleared in upper protocols are resent.

Therefore, when the handover between base stations occurs in the course of HSDPA-based high speed packet communication using the RLC-UM, data loss in high-speed packet data may be caused at the mobile station (UE: User Equipment).

In order to prevent this data loss in high-speed packet data, the mobile communication system of the present invention, when handover across different base stations occurs while HSDPA-based high speed packet communication is in progress, transfers data from the handover source base station to the handover destination base station in accordance with the following two techniques.

First, in the case of IP-RAN (Internet Protocol-Radio Access Network), the RNC informs the handover source base station of a Transport Layer Address (IP Address) and Binding ID [UDP (User Datagram Protocol) port number] of the handover destination base station, thereby allowing the handover source base station to transfer data to the handover destination base station.

Secondly, in the case of ATM-based RAN, the RNC informs the handover source base station of an AAL2 endpoint address of the handover destination base station, thereby allowing the handover source base station to transfer data to the handover destination base station. At this time, an AAL2 connection is newly established thereby to use a link thereof, so that high-speed packet data transfer is accomplished.

The mobile communication system of the present invention is so configured that a sequence number is newly added in the HS-DSCH protocol to allow the handover destination base station to control an order of transferring downlink high-speed packet data to the mobile station when the handover between base stations occurs. This makes possible for the handover destination base station to transfer to the mobile station in right order the high-speed packet data received from the RNC and handover source base station.

Thus, the mobile communication system of the present invention achieves high-speed packet communication in which packets are transferred in a controlled order and no data loss is detected.

Referring now to the drawings, the preferred embodiments of the present invention will be described below.
FIG. 1 is a block diagram showing a configuration of an RNC according to one embodiment of the present invention;
FIG. 2 is a sequence chart showing procedures of data transfer by IP routing in an IP-RAN network according to the embodiment of the present invention;
FIG. 3 is a block diagram showing a configuration of the RNC according to the other embodiment of the present invention;
FIG. 4 is a sequence chart showing procedures of transferring high-speed packet data using an AAL2 connection in an ATM-based network according to the other embodiment of the present invention;
FIG. 5 is a block diagram showing a configuration of a conventional mobile communication system; and
FIG. 6 is a diagram showing a protocol for HS-DSCH.

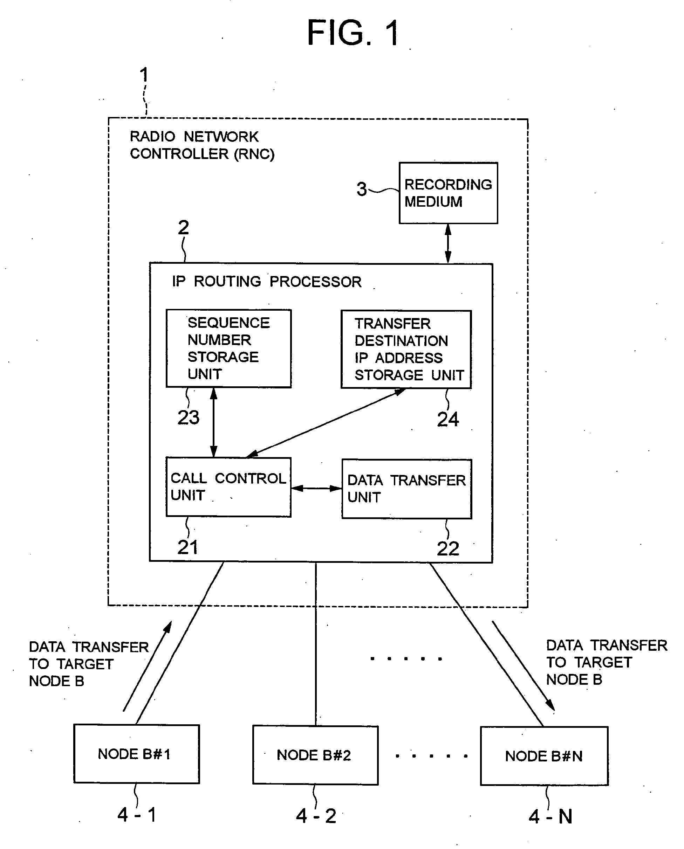

FIG. 1 is a block diagram showing a configuration of an RNC (Radio Network Controller) according to one embodiment of the present invention, and schematically shows a mechanism of data transfer in an IP (Internet Protocol)-based network.

As is observed from FIG. 1, the RNC 1 comprises an IP routing processor 2 and a recording medium 3 having stored therein a program (computer-executable program) executed at the IP routing processor 2, and is connected to each of base stations (NodeB#1 to NodeB#N) 4-1 to 4-N. The IP routing processor 2 comprises a call control unit 21, a data transfer unit 22, a sequence number storage unit 23, and a transfer destination IP address storage unit 24.

The RNC 1 comprises, in addition to the IP routing processor 2, an Iu interface protocol processor, radio interface processor, and the like, which are not directly related to the present invention, so the description of configurations and operations thereof will be omitted.

In this connection, the radio interface processor comprises a PDCP (Packet Data Convergence Protocol) processing unit, an RLC (Radio Link Control) [UM (Unacklowledge Mode), an AM(Acknowledge Mode)] protocol processing unit, an MAC-d (Dedicated Medium Access Control) protocol unit, an HS-DSCHFP (High Speed-Downlink Shared Channel Frame Protocol) protocol processing unit, and the like.

Referring again to FIG. 1, the operation of the RNC 1 will be described below. First, when anHS-DSCH (High Speed - Downlink Shared Channel) is switched from the handover source base station (Serving NodeB) 4-1 to the handover destination base station (Target NodeB) 4-N, the RNC 1 receives an RRC (Radio Resource Control)_Measurement Report representing a measurement report that is sent from a mobile station (UE: User Equipment) (not shown).

The IP routing processor 2 stores in the sequence number storage unit 23, a Sequence Number of HS-DSCHFP at the time of receiving the RRC_Measurement Report.

The call control unit 21 sends RL (Radio Link) Reconfiguration Prepare to the handover source base station 4-1 in order to delete HS-DSCHFP resources therein. Furthermore, the call control unit 21 sends the RL Reconfiguration Prepare to the handover destination base station 4-N in order to add the HS-DSCHFP resources thereto.

Then, the handover destination base station 4-N sends to the RNC 1 RL Reconfiguration Ready containing its own IP address and UDP (User Datagram Protocol) port number. The call control unit 21 stores in the transfer destination IP address storage unit 24, the IP address and UDP port number in the message sent from the handover destination base station 4-N.

The call control unit 21 sends to the handover source base station 4-1, RL Reconfiguration Commit containing the sequence number in the sequence number storage unit 23 stored at the time of receiving the RRC_Measurement Report as well as the IP address and UDP port number of the handover destination base station 4-N.

In accordance with the IP address and UDP port number of the handover destination base station 4-N, the data transfer unit 22 transfers data from the handover source base station 4-1 to the handover destination base station 4-N.

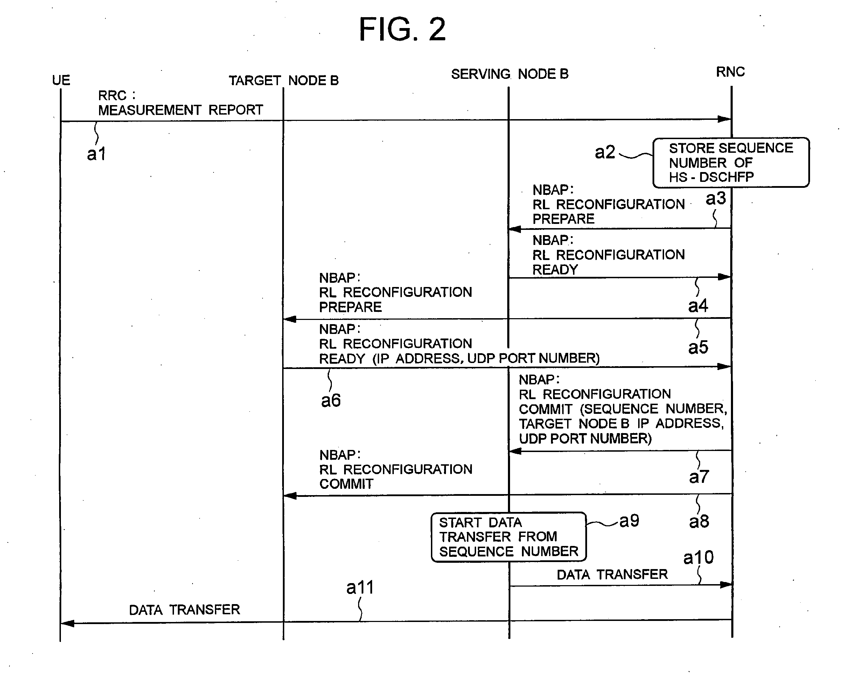

FIG. 2 is a sequence chart showing procedures of data transfer by IP routing in an IP-RAN (Internet Protocol-Radio Access Network) according to one embodiment of the present invention. Referring to both FIGS. 1 and 2, the IP routing data transfer procedures in the IP-RAN network in the embodiment of the present invention will be described below.

In the following description, Transport Layer Address and Binding ID in NBAP (NodeB Application Part): RL Reconfiguration Ready indicate the IP address and UDP (User Datagram Protocol) port number, respectively, of the handover destination base station 4-N.

Upon reception of a message (Measurement Report) requesting activation of handover between base stations from a mobile station while high-speed packet communication is in progress (a1 in FIG. 2), the RNC 1 stores sequence numbers for HS-DSCHFP that have been transmitted up to that moment to the base station (a2 in FIG. 2).

The RNC 1 includes the Transport Layer Address and Binding ID contained in the NBAP: RL Reconfiguration Ready message from the base station into NBAP: RL Reconfiguration Commit to be sent to the handover source base station 4-1, so as thereby to inform the handover source base station 4-1 of the destination of data (a7 of FIG. 2).

Upon receipt of the NBAP: RL Reconfiguration Commit, the handover source base station 4-1 addresses to the Transport Layer Address (IP address) and Binding ID (UDP port number) in the NBAP: RL Reconfiguration Commit, and then sends to the RNC 1 all high-speed packet data of from the sequence number contained in the NBAP: RL Reconfiguration Commit until the time of receiving the NBAP: RL Reconfiguration Commit, both operations of which are conducted by an Activation Time (CFN: Connection Frame Number) after which a cell is switched to another (a9, a10 in FIG. 2).

After the RNC 1 sends the NBAP: RL Reconfiguration Commit by routing, it starts data transfer from the handover source base station 4-1 to the handover destination base station 4-N (all of FIG. 2).

Furthermore, the RNC 1 holds in advance station data indicative of correspondence between Transport Layer Address (IP Address) and each base station, and reads out this station data upon re-starting of the RNC 1 thereby to prepare a Transport Layer Address / base station number conversion Table.

The RNC 1 uses this Transport Layer Address / base station number conversion Table upon receipt of high-speed packet data sent from the handover source base station 4-1, and converts the Transport Layer Address contained in the sent packet data into the base station number, which is thus followed by data transfer to the relevant base station (which is the handover destination base station 4-N).

Thus, according to this embodiment, even when handover across different base stations occurs while HSDPA-based high speed packet communication is in progress, data loss of high-speed packet data can be prevented by transferring packet data from the handover source base station 4-1 to the handover destination base station 4-N. In addition, even in the case where a move of a mobile station from one base station to another occurs in the RNC1, high-speed packet communication can be achieved without causing any data loss.

Specifically, in the case of the IP-RAN network, the RNC 1 informs the handover source base station 4-1 of the Transport Layer Address (IP address) and Binding ID (UDP port number) of the handover destination base station 4-N, thus allowing the handover source base station 4-1 to transfer data to the handover destination base station 4-N.

Accordingly, this embodiment prevents data loss of high-speed packet data, and even when a move of a mobile station from one base station to another occurs in the RNC 1, this embodiment still attains high-speed packet communication without data loss.

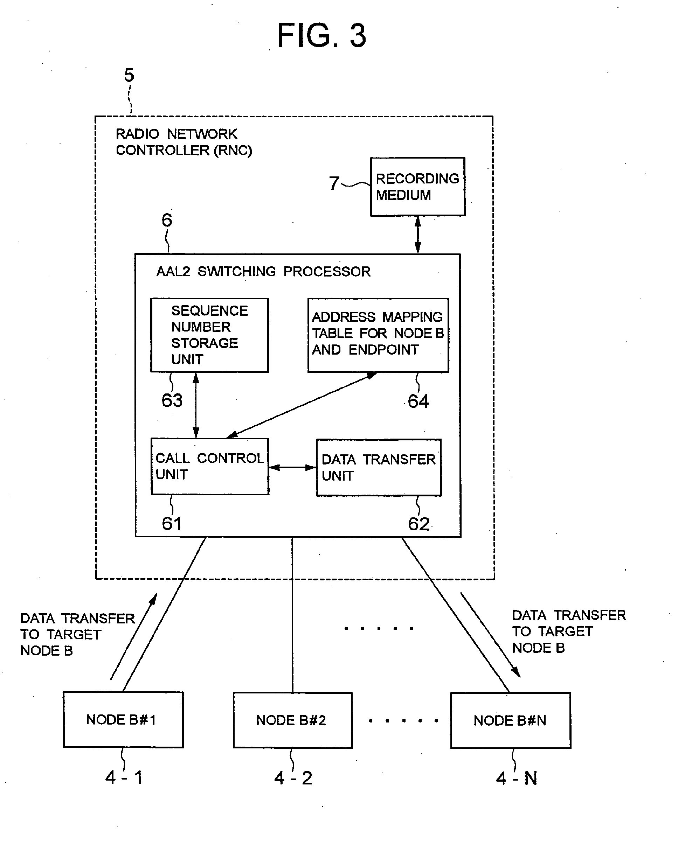

FIG. 3 is a block diagram showing a configuration of the RNC according to the other embodiment of the present invention, and schematically shows a mechanism of data transfer in an ATM (Asychronous Transfer Mode) network.

As shown in FIG. 3, the RNC 5 comprises an AAL2 (ATM Adaptation Layer type 2) switching processor 6 and a recording medium 7 having stored therein a program (computer-executable program) executed at the AAL2 switching processor 6, and is connected to each of base stations (NodeB#1 to NodeB#N) 4-1 to 4-N. The AAL2 switching processor 6 comprises a call control unit 61, a data transfer unit 62, a sequence number storage unit 63, and an address mapping table 64 for Nodes B and endpoints (simply referred to as address mapping table, hereinafter).

The RNC 5 comprises, in addition to the AAL2 switching processor 6, an AAL2 terminating device, an Iu interface protocol processor, a radio interface processor, and the like, which are not directly related to the present invention, so the description of configurations and operations thereof will be omitted.

The operation of the RNC 5 will be now described below with reference to FIG. 3. First, when the HS-DSCH is switched from a handover source base station (Serving NodeB) 4-1 to a handover destination base station (Target NodeB) 4-N, the RNC 5 receives RRC_Measurement Report representing a measurement report that is sent from a mobile station (not shown).

The AAL2 switching processor 6 stores in the sequence number storage unit 63, a sequence number of HS-DSCHFP at the time of receiving the RRC_Measurement Report.

The call control unit 61 locates an endpoint address of the handover destination base station 4-N from the address mapping table 64. The call control unit 61 further sends to the handover source base station 4-1 RL Reconfiguration Prepare containing the endpoint address of the handover destination base station 4-N, in order to clear HS-DSCHFP resources of the handover source base station 4-1.

The handover source base station 4-1 sends to the RNC 1 ALCAP (Access Link Control Application Part): ERQ (Establish Request Message) for which the endpoint address of the handover destination base station 4-N is set to a Destination End Point Address. The call control unit 61 sends the received ALCAP: ERQ to the handover destination base station 4-N in accordance with the Destination End Point Address contained in the ALCAP: ERQ.

The call control unit 61 sends the RL Reconf iguration Prepare to the handover destination base station 4-N in order to add HS-DSCHFP resources thereto. The handover destination base station 4-N then sends RL Reconfiguration Ready to the RNC 1.

Subsequently, the call control unit 61 sends to the handover source base station 4-1 RL Reconfiguration Commit containing a sequence number fetched from the sequence number storage unit 63. The data transfer unit 62 then transfers data from the handover source base station 4-1 to the handover destination base station 4-N on the basis of the Destination End Point Address obtained from the handover source base station 4-1.

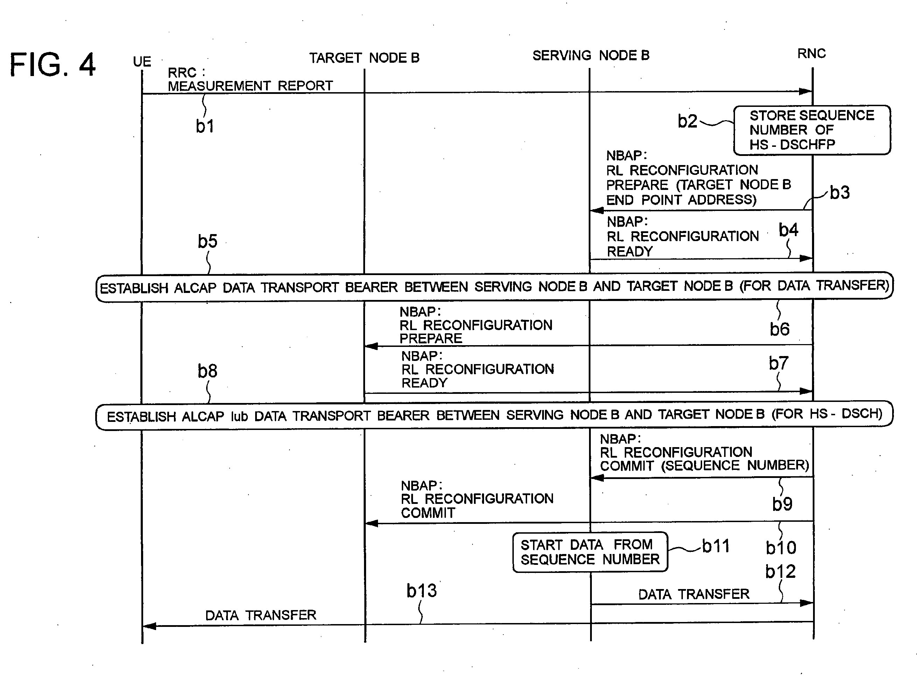

FIG. 4 is a sequence chart showing procedures of transferring high-speed packet data using an AAL2 connection in the ATM-based network according to the other embodiment of the present invention. Referring these FIGS. 3 and 4, the description will be provided for the high-speed packet data transfer procedures using the AAL2 connection in the ATM-based network according to the other embodiment of the present invention.

In the following description, an AAL2 endpoint address and Binding ID in the NBAP: RL Reconfiguration Ready indicate the AAL2 endpoint address and UDP port number of the handover destination base station 4-N, respectively.

In the case of RAN (Radio Access Network), the RNC 5 includes the AAL2 endpoint address of the handover destination base station 4-N in the NBAP: RL Reconfiguration Prepare to be sent to the handover source base station 4-1, thereby to inform the handover source base station 4-1 of a destination of data (b3 in FIG. 4).

After transmitting the NBAP: RL Reconfiguration Ready to the RNC 5, the handover source base station 4-1 sends to the RNC 5 ALCAP:ERQ for which a Destination End Point Address is set to the AAL2 endpoint address received with the NBAP: RL Reconfiguration Prepare, in order to establish an AAL2 connection for high-speed packet data transfer.

The RNC 5 transfers an ALCAP:ERQ message to the handover destination base station 4-N in accordance with the Destination End Point Address contained in the ALCAP:ERQ.

Upon receipt of the ALCAP: ERQ message, the handover destination base station 4-N sends ALCAP:ECF (Establish Confirm Message) which is received via the RNC 5 to the handover source base station 4-1. Consequently, the AAL2 connection is established for high-speed packet data transfer between the handover source base station 4-1 and the handover destination base station 4-N.

Subsequently, when the handover source base station 4-1 receives NBAP: RL Reconfiguration Commit, it sends to the handover destination base station 4-N, by using the AAL2 connection, all high-speed packet data of from the sequence number in the NBAP: RL Reconfiguration Commit to the time of receiving the NBAP: RL Reconfiguration Commit, during the Activation Time (CFN) after which a cell is switched to another (b9 to b13 in FIG. 4).

Thus in this embodiment, even when handover across different base stations occurs while HSDPA-based high speed packet communication is in progress, data loss of high-speed packet data is prevented by transferring packet data from the handover source base station 4-1 to the handover destination base station 4-N, and also even when the RNC 5 detects a mobile station moving from one base station to another, high-speed packet communication can be achieved without causing any data loss.

Specifically, in the case of the ATM-based RAN network, the RNC 5 informs the handover source base station 4-1 of the AAL2 endpoint address of the handover destination base station 4-N, thereby allowing the handover source base station 4-1 to transfer data to the handover destination base station 4-N. At this time, the AAL2 connection is newly established to use a link thereof, so that high-speed data transfer is accomplished.

Accordingly, this embodiment prevents data loss of high-speed packet data, and also even when the RNC 5 detects a mobile station moving from one base station to another, this embodiment still attains high-speed packet communication without causing any data loss.

As described above, the present invention has the aforementioned structure and operations, and thus provides an advantage that high-speed packet data transfer can be achieved without data loss during handover between base stations in the course of high-speed packet communication.

## Claims

1. A mobile communication system including a radio network controller controlling a base station, wherein
the radio network controller comprises means for transferring packet data from a handover source base station to a handover destination base station when handover between base stations occurs due to a move of a mobile station in the course of high-speed packet communicationn by an HSDPA (High Speed Downlink Packet Access) system between the base station and the mobile station.

2. The mobile communication system according to claim 1, wherein the means for transferring packet data transfers data from the handover source base station to the handover destination base station by routing using an IP (Internet Protocol) address.

3. The mobile communication system according to claim 2, wherein the means for transferring packet data informs the handover source base station of an IP address and UDP (User Datagram Protocol) port number of the handover destination base station.

4. The mobile communication system according to claim 1, wherein the means for transferring packet data establishes an AAL2 [ATM (Asychronous Transfer Mode) Adaptation Layer type 2] connection between the handover source base station and the handover destination base station thereby to transfer data from the handover source base station to the handover destination base station.

5. The mobile communication system according to claim 4, wherein the means for transferring packet data informs the handover source base station of an AAL2 endpoint address of the handover destination base station.

6. The system according to claim 1, 2, 3, 4 or 5, wherein a sequence number is added to an HS-DSCH (High Speed-Downlink Shared Channel) Frame Protocol so that the handover destination base station controls an order of transferring downlink high-speed packet data when the handover between base stations occurs.

7. A radio network controller controlling a base station comprising:
means for transferring packet data from a handover source base station to a handover destination base station when handover between base stations occurs due to a move of a mobile station in the course of high-speed packet communication by an HSDPA (High Speed Downlink Packet Access) system between the base station and the mobile station.

8. The radio network controller according to claim 7, wherein the means for transferring packet data transfers data from the handover source base station to the handover destination base station by routing using an IP (Internet Protocol) address.

9. The radio network controller according to claim 8, wherein the means for transferring packet data informs the handover source base station of an IP address and UDP (User Datagram Protocol) port number of the handover destination base station.

10. The radio network controller according to claim 7, wherein the means for transferring packet data establishes an AAL2 [ATM (Asychronous Transfer Mode) Adaptation Layer type 2] connection between the handover source base station and the handover destination base station thereby to transfer data from the handover source base station to the handover destination base station.

11. The radio network controller according to claim 10, wherein the means for transferring packet data informs the handover source base station of an AAL2 endpoint address of the handover destination base station.

12. The controller according to claim 7, 8, 9, 10 or 11, wherein a sequence number is added to an HS-DSCH (High Speed-Downlink Shared Channel) Frame Protocol so that the handover destination base station controls an order of transferring downlink high-speed packet data when the handover between base stations occurs.

13. A method of transferring data for a mobile communication system including a radio network controller controlling a base station, comprising:
a step of transferring packet data from a handover source base station to a handover destination base station when handover between base stations occurs due to a move of a mobile station in the course of high-speed packet communication by an HSDPA (High Speed Downlink Packet Access) system between the base station and the mobile station, the step being executed by the radio network controller.

14. The method according to claim 13, wherein the step of transferring packet data includes transferring data from the handover source base station to the handover destination base station by routing using an IP (Internet Protocol) address.

15. The method according to claim 14, wherein the step of transferring packet data includes informing the handover source base station of an IP address and UDP (User Datagram Protocol) port number of the handover destination base station.

16. The method according to claim 13, wherein the step of transferring packet data includes establishing an AAL2 [ATM (Asychronous Transfer Mode) Adaptation Layer type 2] connection between the handover source base station and the handover destination base station thereby to transfer data from the handover source base station to the handover destination base station.

17. The method according to claim 16, wherein the step of transferring packet data includes informing the handover source base station of an AAL2 endpoint address of the handover destination base station.

18. The method according to claim 13, 14, 15, 16 or 17, wherein a sequence number is added to an HS-DSCH (High Speed-Downlink Shared Channel) Frame Protocol so that the handover destination base station controls an order of transferring downlink high-speed packet data when the handover between base stations occurs.

19. A program of a method of transferring data for a mobile communication system including a radio network controller controlling a base station, wherein the program causes a computer to execute a step of:
transferring packet data from a handover source base station to a handover destination base station when handover between base stations occurs due to a move of a mobile station in the course of high-speed packet communication by an HSDPA (High Speed Downlink Packet Access) system between the base station and the mobile station.
